# EUROPÄISCHE PATENTSCHRIFT

(11) **EP 0 846 884 B1**
(45) Veröffentlichungstag und Bekanntmachung des Hinweises auf die Patenterteilung: **26.04.2006**
(21) Anmeldenummer: 97118410.6
(22) Anmeldetag: 23.10.1997
(51) Int. Cl.: F16D 65/12

(54) **Verfahren zur Herstellung einer Bremsscheibe, insbesondere als Wellen- oder Radbremsscheibe für Schienenfahrzeuge**
Method of manufacturing a brake disc, particularly a shaft or wheel disc for railway vehicles
Procédé de fabrication d'un disque de frein, en particulier d'un disque de freind'arbre ou de roue pour véhicules de chemin de fer.

(30) Priorität: 03.12.1996 DE 19650056
(43) Veröffentlichungstag der Anmeldung: 10.06.1998
(60) Teilanmeldung: 04025984.8
(73) Patentinhaber: Faiveley Transport Remscheid GmbH, 42859 Remscheid (DE)
(72) Erfinder: Engels, Albrecht, Dr., 42859 Remscheid (DE); Ruppert, Helmut, 42857 Remscheid (DE); Zeuner, Thomas, 42857 Remscheid (DE); Stojanov, Pejo, Dr., 52074 Aachen (DE)
(74) Vertreter: Gerbaulet, Hannes

(56) Entgegenhaltungen:
- WO-A-95/01519
- WO-A-95/09251
- WO-A-95/12468
- DE-A- 19 626 175
- DE-C- 19 504 949
- US-A- 5 259 437
- US-A- 5 325 941
- US-A- 5 429 173

## Beschreibung

Die Erfindung betrifft ein Verfahren zum Herstellen einer Bremsscheibe nach dem Oberbegriff des Anspruch.

Bremsscheiben sind in verschiedenen Ausführungen bekannt, sie können aus einem einteiligen Bauteil einschließlich Nabe bestehen oder aus einem Ringkörper, der an einer Nabe befestigt wird. Dabei ist der Tragkörper mit der die Reibfläche bildenden Schicht als Monoblockscheibe ausgebildet (DE 44 00 898).

Zur Herstellung von Bremsscheiben ist es bekannt (DE 42 08 930), auf einem durch Druckgießen oder Formpressen hergestellten Tragkörper Keramikpulvermaterialien, gegebenenfalls als vorgeformte Einlage, aufzubringen und diese bei hohem Druck und hoher Temperatur zur Bildung der die Reibfläche aufweisenden Schicht mit dem Tragkörper zu verbinden.

Bei dem in der EP 0 912 277 B1 beschriebenen Verfahren zur Herstellung einer Bremsscheibe, insbesondere als Achs- oder Radbremsscheibe für Schienenfahrzeuge, mit einem aus einem Leichtmetall oder einer Leichtmetall-Legierung in einer Gießform gegossenen Tragkörper, der ein- oder beidseitig eine ringförmige Schicht aus einem Metall-Keramik-Verbundstoff aufweist, die eine Reibfläche für eine Bremsbacke bildet, werden die Schmelze des Tragkörpermaterials und die Schmelze des Schichtmaterials zeitversetzt in der Gießform aufeinander gegossen.

Die WO 95/01519 beschreibt ein Verfahren zur Herstellung einer Bremsscheibe mit einem aus einer Legierung in einer Gießform gegossenen Rotorkörper, der einen ringförmigen Rotoreinsatz aufweist, wobei der Rotoreinsatz aus einem Paar beabstandeter Bremsscheiben und einer Anzahl Abstandselemente besteht. Der Rotoreinsatz wird aus einem Metallmatrixverbund gegossen und dann in einer Rotorform platziert, wobei vorgesehen werden kann den Rotoreinsatz bis zu einer bestimmten Temperatur vorzuwärmen oder mit einem vorgewählten Material zu beschichten, um den metallurgischen Verbindungsvorgang zwischen Rotoreinsatz und Rotorkörper zu unterstützen. Spezielle Maßnahmen sind nicht vorgesehen.

Aufgabe der Erfindung ist es, die Herstellung von Bremsscheiben zu verbessern und zu vereinfachen.

Diese Aufgabe wird bei einem Verfahren der eingangs genannten Gattung durch den charakterisierenden Teil des Anspruchs gelöst.

Der Wärmefluß von der Schmelze zur Einlage und damit die Gefügebildung wird verbessert, wenn die Oberfläche der Einlage zumindest bereichsweise mit Vorsprüngen und/oder Ausnehmungen versehen wird.

Eine Verbesserung wird auch erreicht, wenn die Oberfläche der Einlage zumindest bereichsweise mit einer Beschichtung versehen wird, die bei Kontakt mit der Schmelze des Tragkörpers eine exotherme Reaktion hervorruft und/oder das Benutzungsverhalten verbessert. Das gilt insbesondere für eine Nickelbeschicht, denn Nickel reagiert ab 300°C mit Aluminium exotherm:

Anspruchsgemäβ werden die schmelzen im sandgieß-, Niederdruck-, Gegendruck- oder Vakuumverfahren oder einer Kombination dieser Gießverfahren vergossen. Im übrigen werden die gegossenen Bremsscheiben anschließend einer Wärmebehandlung unterzogen.

Als Schichtmaterial wird eine AlSi-Legierung mit partikelförmigen Verstärkungseinlagerungen oder eine übereutektische AlSi-Legierung verwendet. Aus diesem Material können auch die Einlagen bestehen. Als Trägerkörpermaterial wird vorzugsweise eine duktile Al-Legierung verwendet.

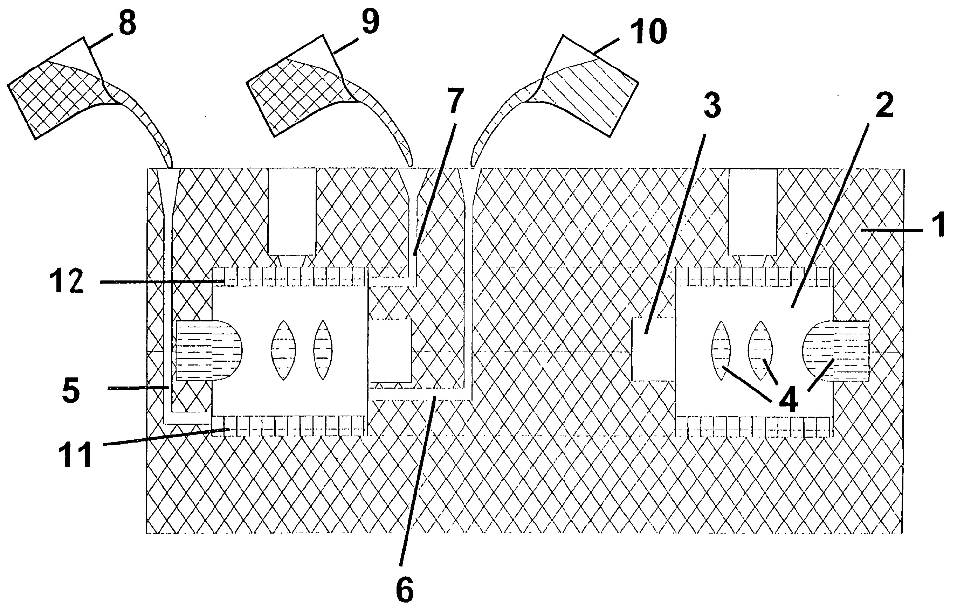

Im folgenden wird ein in der Zeichnung dargestelltes Ausführungsheispiel der Erfindung erläutert: die einzige Figur zeigt schematisch einen Schnitt durch eine zweiteilige Gießform zur Herstellung von Bremsscheiben.

In der Gießform 1 ist ein kreisringförmiger Formhohlraum gebildet mit einem größeren Hohlraum 2 für den Tragkörper und einem kleineren Hohlraum 3 für den Befestigungsnocken der Bremsscheibe. Im größeren Hohlraum 2 des Formhohlraums sind Kerne 4 angeordnet, die zur Ausbildung von Kühlrippen an den Bremsscheiben dienen.

Bei der dargestellten Ausführung führen zum größeren Hohlraum 2 drei Gießsysteme 5, 6, 7, bestehend jeweils aus Einguß, Lauf und Anschnitt, denen jeweils Gießpfannen 8, 9, 10 zugeordnet sind. Die Anschnitte der Gießsysteme 5, 6, 7 münden, wie dargestellt, in unterschiedlichen Höhen in den größeren Hohlraum 2. Die beiden Gießpfannen 8, 9 enthalten eine Schmelze einer partikelverstärkten AlSi-Legierung (z. B. Duralcan) als Schichtmaterial, während die Gießpfanne 10 eine Schmelze aus einer duktilen Al-Legierung (z. B. Legierung A 356) für das Tragkörpermaterial enthält.

Zur Herstellung einer Bremsscheibe mit einem Tragkörper, der beidseitig eine ringförmige Schicht 11/12 aus einem Keramikwerkstoff aufweist, die eine Reibfläche für eine Bremsbacke bildet, wird zunächst die Schmelze aus der Gießpfanne 8 in den Hchiraum 2 gegossen, bis sich auf dem Boden des Formhohlraums eine hinreichend dicke schicht 11 gebildet hat. Die Schmelze wird auf eine Temperatur zwischen der Gießtemperatur und 100°C oder Raumtemperatur abgekühlt. Dann wird aus der Gießpfanne 10 die Schmelze des Trägermaterials in den Hochlraum 2 eingegossen, wobei auch der kleinere Hohlraum 3 des Formhohlraums ausgefüllt wird. Die Schmelze aus der Gießpfanne 10 wird bis zu einem derartigen Niveau in den Formhohlraum eingefült, daß bis zur Oberseite des Formhohlraums ein Abstand verbfeibt, der der gewünschten Dikke der die Reibfläche bildenden Schicht 12 auf der anderen Seite der Bremsscheibe entspricht. Auch die Schmelze des Tragkörpermaterials aus der Gießpfanne 10 wird abgekühlt, bis sie zumindest im Bereich ihrer freien Oberfläche eine Temperatur zwischen der Gießtemperatur und 100 °C oder Raumtemperatur erreicht hat. Dann wird schließlich das Schichtmaterial aus der Gießpfanne 9 in den Formhohlraum zur Bildung der anderen Schicht 12 eingegossen. In den Übergangsbereichen der beiden unterschiedlichen Materialien für den Tragkörper einerseits und die Schichten andererseits bildet sich ein Gradientengefüge mit einem hinreichenden Verbund zwischen den Materialien aus. Die aus der Gießform 1 entnommenen Bremsscheiben können anschließend einer Wärmebehandlung unterzogen werden.

### Bezugszeichenliste

- (1): Gießform
- (2): Hohlraum für den Tragkörper
- (3): Hohlraum für den Befestigungsnocken
- (4): Kern
- (5): Gießsystem, bestehend aus Einguß, Lauf und Anschnitt
- (6): Gießsystem, bestehend aus Einguß, Lauf und Anschnitt
- (7): Gießsystem, bestehend aus Einguß, Lauf und Anschnitt
- (8): Gießpfanne
- (9): Gießpfanne
- (10): Gießpfanne
- (11): Schicht
- (12): Schicht

## Patentansprüche

1. Verfahren zur Herstellung einer Bremsscheibe, insbesondere als Achs- oder Radbremsscheibe für Schienenfahrzeuge, mit einem aus einem Leichtmetall oder einer Leichtmetall-Legierung in einer Gießform (1) gegossenen Tragkörper, der ein- oder beidseitig eine ringförmige Schicht (11, 12) aus einem Metall-Keramik-Verbundwerkstoff aufweist, die eine Reibfläche für eine Bremsbacke bildet, wobei als Trägermaterial eine vorzugsweise duktile Al-Legierung und als Schichtmaterial eine AlSi-Legierung mit partikelförmigen Verstärkungseinlagerungen oder eine überteutektische AlSi-Legierung verwendet wird,
**dadurch gekennzeichnet, dass**
a) die Schmelze des Tragkörpermaterials und die Schmelze des Schichtmaterials zeitversetzt in der Gießform (1) aufeinander gegossen werden und die zuerst gegossene Schmelze zumindest im Oberflächenbereich bei der Erstarrung eine derart ausreichend hohe Wärmemenge besitzt, daß im Übergangsbereich der beiden Materialien ein Gradientengefüge gebildet wird,
b) wobei die zuerst gegossene Schmelze auf eine Temperatur zwischen der Gießtemperatur und der eutektischen Temperatur abgekühlt wird und die Schmelzen im Sandgieß-, Niederdruck-, Gegendruck- oder Vakuumverfahren oder einer Kombination dieser Gießverfahren vergossen werden, und
c) die gegossenen Bremsscheiben anschließend einer Wärmebehandlung unterworfen werden.

## Claims

1. Method for manufacturing a brake disk, in particular as axle or wheel-mounted brake disk for rail vehicles with a carrying body moulded of a light metal or a light metal alloy in a casting mould (1), carrying body which has on one or both sides a ring-shaped layer (11, 12) of a metal/ceramic composite material which forms a friction surface for a brake shoe, whereby a preferably ductile aluminium alloy is used as carrying material and an AlSi alloy with particle-shaped reinforcement intercalations or a hypereutectic AlSi alloy is used as layer material,
**characterized in that**
a) the melting of the carrying body material and the melting of the layer material are casted on each other with a time-offset in the casting mould (1) and the first casted melting has by solidification at least in the surface area a sufficiently high heat quantity so that a gradient structure is formed in the transition area of both materials,
b) whereby the first casted melting is cooled to a temperature between the casting temperature and the eutectic temperature and the meltings are casted in sand casting, low pressure, counter pressure or vacuum casting or in a combination of these casting methods and
c) the casted brake disks are then submitted to a heat treatment.

## Revendications

1. Procédé pour la fabrication d'un disque de frein, en particulier comme disque de frein monté sur l'essieu ou sur la roue pour véhicules sur rails, avec un corps de support moulé en un métal léger ou un alliage de métal léger dans un moule (1), corps de support qui présente sur un ou sur deux côtés une couche annulaire (11, 12) en un matériau composite métal/céramique qui forme une surface de friction pour une mâchoire de frein, un alliage d'aluminium de préférence ductile étant utilisé comme matériau de support et un alliage d'AlSi avec des inclusions de renforcement en forme de particules ou un alliage d'AlSi hyper eutectique étant utilisé comme matériau de la couche,
**caractérisé en ce que**
a) la fonte du matériau du corps de support et la fonte du matériau de la couche sont coulés l'un sur l'autre en décalage dans le temps dans le moule (1) et la fonte coulée tout d'abord possédant, lors de la prise, au moins dans la zone de la surface une quantité de chaleur suffisamment importante pour qu'une structure de gradient se forme dans la zone de transition des deux matériaux,
b) la fonte coulée tout d'abord étant refroidie à une température entre la température de fonte et la température eutectique et les fontes étant coulées en coulage en sable, à basse pression, à contre-pression ou sous vide ou en une combinaison de ces procédés de coulée et
c) les disques de frein coulés sont ensuite soumis à un traitement thermique.
